# EUROPEAN PATENT APPLICATION

(11) **EP 4 675 744 A1**
(43) Date of publication of application: **07.01.2026**
(21) Application number: 24878472.0
(22) Date of filing: 22.05.2024
(51) Int. Cl.: H01M 10/0585

(54) **BATTERY CELL, BATTERY, AND ELECTRIC DEVICE**

(30) Priority: 20.10.2023 CN 202322831854 U
(71) Applicant: Contemporary Amperex Technology Co., Limited, Ningde, Fujian 352100 (CN)
(72) Inventor: HUANG, Xian, Ningde, Fujian 352100 (CN); LIU, Chengyong, Ningde, Fujian 352100 (CN); CHEN, Yuhang, Ningde, Fujian 352100 (CN); CAI, Xiaolan, Ningde, Fujian 352100 (CN); HU, Bobing, Ningde, Fujian 352100 (CN)
(74) Representative: Ran, Handong
(86) International application number: PCT/CN2024/094741
(87) International publication number: WO 2025/081819

(57) **Abstract**

Embodiments of the present application provide a battery cell, a battery, and an electric device. The battery cell comprises an electrode assembly, a separator, and a support member. The electrode assembly comprises a first electrode sheet body and a second electrode sheet body which have opposite polarities and are stacked in a first direction; the first electrode sheet body comprises a body portion and flange portions; the projection of the body portion on the second electrode sheet body in the first direction overlaps at least part of the second electrode sheet body; the flange portions are connected to at least part of the peripheral side of the body portion and protrude out of the outer edge of the second electrode sheet body; the separator wraps the electrode assembly; the support member is located in the separator; the support member is arranged on at least one side of the electrode assembly in the first direction; and the projection of the support member on the first electrode sheet body in the first direction covers at least part of the corresponding flange portion and at least part of the body portion. The present application can improve the reliability of the battery cell.

## Description

### CROSS-REFERENCE TO RELATED APPLICATIONS

The present application claims priority to Chinese Patent Application (Application No.: 202322831854.1), entitled "BATTERY CELL, BATTERY, AND POWER CONSUMING APPARATUS" and filed on October 20, 2023, which is incorporated herein by reference in its entirety.

### TECHNICAL FIELD

This application relates to the field of battery technologies, and more specifically, to a battery cell, a battery, and a power consuming apparatus.

### BACKGROUND

Battery cells are widely used in electronic devices such as mobile phones, laptop computers, electric scooters, electric vehicles, electric aircraft, electric ships, electric vehicle toys, electric ship toys, electric aircraft toys, and electric tools.

In the development of battery technology, how to improve the reliability of battery cells is a research direction in the battery technology.

### SUMMARY

This application provides a battery cell, a battery, and a power consuming apparatus, which can improve the reliability of the battery cell.

Embodiments of this application provide a battery cell, including an electrode assembly, a separator, and a support member. The electrode assembly includes a first electrode plate body and a second electrode plate body that have opposite polarities and are stacked in a first direction. The first electrode plate body includes a body portion and flange portions. A projection of the body portion onto the second electrode plate body in the first direction overlaps at least part of the second electrode plate body. The flange portions are connected to at least part of a peripheral side of the body portion and protrude from an outer edge of the second electrode plate body. The separator wraps the electrode assembly. The support member is located in the separator. The support member is disposed on at least one side of the electrode assembly in the first direction. A projection of the support member onto the first electrode plate body in the first direction covers at least part of the flange portions and at least part of the body portion.

In the foregoing technical solution, for the battery cell in the embodiments of this application, the support member is disposed on at least one side of the electrode assembly. The support member covers both at least part of the flange portion and at least part of the body portion. Under the support of the body portion, the support member can form support for the flange portions to reduce the compression of an aluminum laminate film and other components on the flange portions and mitigate the bending and fracture of the flange portions, thereby improving the reliability of the battery cell.

In some embodiments, the projection of the body portion onto the second electrode plate body in the first direction overlaps the entire second electrode plate body. The flange portions are circumferentially connected to the peripheral side of the body portion.

In the foregoing technical solution, the flange portions protrude from the entire peripheral side of the second electrode plate body, thereby accommodating process deviations to enable more orderly and controllable stacking of the first electrode plate body and the second electrode plate body, and further facilitating the control of an active material coating area and also facilitating manufacturing and assembly.

In some embodiments, the flange portions protrude from two sides of the second electrode plate body facing away from each other in a third direction. The projection of the support member onto the first electrode plate body in the first direction covers at least part of the flange portion on at least one side of the two sides facing away from each other. The third direction, the first direction, and a second direction intersect pairwise. The second direction is parallel to an arrangement direction from a top end to a bottom end of the electrode assembly. The electrode assembly further includes a tab. The tab is located at the top end.

In the foregoing technical solution, the flange portions located on two sides of the first electrode plate body facing away from each other in the third direction are more prone to bending under compression. Therefore, the projection of the support member onto the first electrode plate body in the first direction covers at least part of the flange portion on at least one side of the two sides facing away from each other, so that the bending and fracture of the part of the flange portion can be mitigated, thereby improving the reliability of the battery cell.

In some embodiments, the projection of the support member onto the first electrode plate body in the first direction covers the entire flange portion on one side of the two sides facing away from each other.

In the foregoing technical solution, the support member may support the region of the entire side of the flange portion protruding in the third direction, so that a support area is large, to further reduce the compression of the aluminum laminate film and other components on the flange portions, mitigate the bending of the flange portions, and make the flange portions less likely to fracture, thereby improving the use reliability of the battery cell.

In some embodiments, two support members are provided. A projection of one of the support members onto the first electrode plate body in the first direction covers the flange portion on one side of the two sides facing away from each other. A projection of the other one of the support members onto the first electrode plate body in the first direction covers the flange portion on the other side of the two sides facing away from each other.

In the foregoing technical solution, two support members are provided. The two support members may form support for the body portion along the flange portions on two sides facing away from each other in the third direction, to mitigate the bending on two sides and make the flange portions less likely to fracture, thereby improving the use reliability of the battery cell.

In some embodiments, the projection of the support member onto the first electrode plate body in the first direction covers the entire first electrode plate body.

In the foregoing technical solution, the support area of the support member can be further increased, to mitigate the compression on the first electrode plate body, mitigate the bending of the flange portions, and make the flange portions less likely to fracture, thereby improving the use reliability of the battery cell.

In some embodiments, a plurality of support members are provided. The plurality of support members are disposed at intervals in the second direction.

In the foregoing technical solution, the plurality of support members are disposed at intervals in the second direction. In this way, the total weight of the plurality of support members can be reduced while mitigating bending, thereby increasing the energy density of the battery cell.

In some embodiments, the projection of the body portion onto the second electrode plate body in the first direction overlaps the entire second electrode plate body. The flange portions are circumferentially connected to the peripheral side of the body portion. Two adjacent flange portions are disposed at an included angle. The projection of the support member onto the first electrode plate body in the first direction covers at least one junction region between two flange portions disposed at an included angle.

In the foregoing technical solution, the support member is disposed at a junction region between two flange portions. The junction region is highly susceptible to compression. Therefore, the bending of the flange portions can be further mitigated, making the flange portions less likely to fracture. In addition, the junction region is a connection position between two flange portions. Therefore, both the flange portions disposed at an included angle may be protected.

In some embodiments, the support member includes a first plate body and a second plate body that are disposed opposite in the first direction. The first plate body is laminated on one side of the electrode assembly in the first direction. The second plate body is laminated on the other side of the electrode assembly in the first direction. Respective projections of the first plate body and the second plate body onto the electrode assembly in the first direction cover at least part of the flange portion and at least part of the body portion.

In the foregoing technical solution, the first plate body and the second plate body may form support for more flange portions arranged in the first direction, to mitigate the compression of aluminum laminate films on two sides of the electrode assembly facing away from each other in the first direction on the plurality of flange portions, and mitigate the bending and fracture of more flange portions, thereby further improving the reliability of the battery cell.

In some embodiments, the support member further includes a guide portion. The guide portion includes a first part and a second part. The first part is connected to one of the first plate body and the second plate body. The second part is connected to the other one of the first plate body and the second plate body. The first part is slidable or rollable in the first direction along the second part. The first part and the second part are configured to guide opposite movements of the first plate body and the second plate body in the first direction.

In the foregoing technical solution, the guide portion is disposed to guide the movements of the first plate body and the second plate body in the first direction, to mitigate displacements of the first plate body and the second plate body in another direction, for example, the third direction, during movements, thereby improving the support capability of the first plate body and the second plate body for the flange portions.

In some embodiments, the flange portions protrude from the two sides of the second electrode plate body facing away from each other in the third direction. The guide portion is connected to one end of two ends of the first plate body facing away from each other in the third direction. The third direction, the first direction, and the second direction intersect pairwise. The second direction is parallel to the arrangement direction from the top end to the bottom end of the electrode assembly. The electrode assembly further includes the tab. The tab is located at the top end.

In the foregoing technical solution, the guide portion of the support member is connected to one end of the two ends of the first plate body facing away from each other in the third direction. In this way, the guide portion hardly interferes with the tab, and the assembly of the support member is facilitated.

In some embodiments, the flange portions protrude from the two sides of the second electrode plate body facing away from each other in the third direction. Two guide portions are provided. The two guide portions are connected to two ends of the first plate body facing away from each other in the third direction. The third direction, the first direction, and the second direction intersect pairwise. The second direction is parallel to the arrangement direction from the top end to the bottom end of the electrode assembly. The electrode assembly further includes the tab. The tab is located at the top end.

In the foregoing technical solution, the guide portion is connected to two ends of the first plate body facing away from each other in the third direction. That is to say, the support member can be circumferentially arranged to form a ring structure, and may support both flange portions on two sides in the third direction. In addition, the displacements of the first plate body and the second plate body can be further limited, to reduce the displacements of the first plate body and the second plate body in another direction, for example, the third direction, thereby improving the support capability of the first plate body and the second plate body for the flange portions.

In some embodiments, a groove is formed in the second part. The first part is engaged with the groove of the second part through insertion. The first part is slidable along side walls of the groove in the first direction.

In the foregoing technical solution, the first part is engaged with the groove of the second part through insertion. This arrangement manner facilitates assembly, and can better limit the first plate body and the second plate body in another direction, for example, the third direction, i.e., bidirectionally in the third direction, to further mitigate the misalignment between the first plate body and the second plate body, thereby improving the support of the first plate body and the second plate body for the flange portions.

In some embodiments, a maximum deformation dimension of the guide portion in the first direction is greater than or equal to a maximum expansion dimension of the electrode assembly in the first direction. The maximum expansion dimension is a maximum dimension of the electrode assembly in the first direction minus an initial dimension of the electrode assembly in the first direction.

In the foregoing technical solution, the guide portion may keep providing guide as the thickness of the electrode assembly changes, to mitigate the misalignment between the first plate body and the second plate body.

In some embodiments, the initial dimension of the electrode assembly in the first direction is h1. The maximum deformation dimension of the guide portion in the first direction is greater than or equal to 0.7h1.

In the foregoing technical solution, the guide portion may meet maximum expansion range requirements of most electrode assemblies in the first direction, thereby improving the applicability of the support member.

In some embodiments, the flange portions protrude from two sides of the second electrode plate body facing away from each other in a second direction. The support member protrudes from at least one side of the two sides of the first electrode plate body facing away from each other in the second direction. The second direction is parallel to an arrangement direction from a top end to a bottom end of the electrode assembly. The electrode assembly further includes a tab. The tab is located at the top end.

In the foregoing technical solution, the support member can maximally support edge regions of the flange portions in the second direction, to improve the support of the support member for the flange portions, further mitigate the compression of the aluminum laminate film and other components on edges of the flange portions, and mitigate the bending and fracture of the flange portions, thereby improving the reliability of the battery cell.

In some embodiments, the support member protrudes in the second direction from two sides of the first electrode plate body facing away from each other. A dimension of the support member protruding in the second direction from either side of the first electrode plate body is L1. L1 satisfies 0.5 mm ≤ L1 ≤ 5 mm.

In the foregoing technical solution, the dimension of the support member protruding in the second direction from the flange portion is limited to be greater than or equal to 0.5 mm, thereby facilitating manufacturing. The dimension of the support member protruding in the second direction from the flange portion is limited to be less than or equal to 5 mm, so that the occupied space and weight of the support member can be reduced, thereby improving the energy density of the battery cell.

In some embodiments, L1 satisfies 0.5 mm ≤ L1 ≤ 1.5 mm.

In the foregoing technical solution, the dimension of the support member protruding in the second direction from the flange portion is limited to be less than or equal to 1.5 mm, so that the occupied space and weight of the support member in the second direction can be further reduced, thereby improving the energy density of the battery cell.

In some embodiments, the flange portions protrude from two sides of the second electrode plate body facing away from each other in a third direction. The support member protrudes from at least one side of two sides of the first electrode plate body facing away from each other in the third direction. The third direction, the first direction, and a second direction intersect pairwise. The second direction is parallel to an arrangement direction from a top end to a bottom end of the electrode assembly. The electrode assembly further includes a tab. The tab is disposed at the top end.

In the foregoing technical solution, the support member can maximally support edge regions of the flange portions in the third direction, to improve the support of the support member for the flange portions, further mitigate the compression of an aluminum laminate film and other components on the flange portions, and mitigate the bending and fracture of the flange portions, thereby improving the reliability of the battery cell.

In some embodiments, the support member protrudes in the third direction from two sides of the first electrode plate body facing away from each other. A dimension of the support member protruding in the third direction from either side of the first electrode plate body is L2. L2 satisfies 0.5 mm ≤ L2 ≤ 5 mm.

In the foregoing technical solution, the dimension of the support member protruding in the third direction from the flange portion is limited to be greater than or equal to 0.5 mm, thereby facilitating manufacturing. The dimension of the support member protruding in the third direction from the flange portion is limited to be less than or equal to 5 mm, so that the occupied space and weight of the support member can be reduced, thereby improving the energy density of the battery cell.

In some embodiments, L2 satisfies 0.5 mm ≤ L2 ≤ 1.5 mm.

In the foregoing technical solution, the dimension of the support member protruding in the third direction from the flange portion is limited to be less than or equal to 1.5 mm, so that the occupied space and weight of the support member in the third direction can be further reduced, thereby improving the energy density of the battery cell.

In some embodiments, the support member is provided with a lightening hole.

In the foregoing technical solution, the lightening hole is provided, so that the weight of the support member can be reduced, thereby increasing the energy density of the battery cell.

In some embodiments, the battery cell is a pouch-type stacked battery cell.

In the foregoing technical solution, the separator of the pouch-type stacked battery cell has low structural strength, and therefore is prone to the problem of compression on the edges of the electrode assembly. The support member is disposed in the separator, so that the compression on the flange portions can be reduced, to mitigate the bending of the flange portions and reduce the possibility of fracture, thereby improving the reliability of the pouch-type battery cell.

According to a second aspect, embodiments of this application further provide a battery, including the foregoing battery cell.

According to a third aspect, embodiments of this application further provide a power consuming apparatus, including the foregoing battery. The battery is configured to supply electric energy.

### BRIEF DESCRIPTION OF THE DRAWINGS

In order to provide a clearer explanation of the technical solution of the embodiments of this application, a brief introduction will be given to the accompanying drawings required in the embodiments of this application. It is evident that the accompanying drawings described below are only some embodiments of this application. For persons of ordinary skill in the art, other accompanying drawings can be obtained based on the drawings without any creative effort.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery cell according to some embodiments of this application;
FIG. 4 is a schematic structural diagram of an electrode assembly in a battery cell according to some embodiments of this application;
FIG. 5 is a top view of the electrode assembly shown in FIG. 4;
FIG. 6 is a left view of the electrode assembly shown in FIG. 4;
FIG. 7 is another schematic structural diagram of an electrode assembly in a battery cell according to some embodiments of this application;
FIG. 8 is a partial schematic structural diagram of a battery cell according to some embodiments of this application;
FIG. 9 is a rear view of the battery cell shown in FIG. 8;
FIG. 10 is another partial schematic structural diagram of a battery cell according to some embodiments of this application;
FIG. 11 is a rear view of the battery cell shown in FIG. 10;
FIG. 12 is yet another partial schematic structural diagram of a battery cell according to some embodiments of this application;
FIG. 13 is a top view of the battery cell shown in FIG. 12;
FIG. 14 is still another partial schematic structural diagram of a battery cell according to some embodiments of this application;
FIG. 15 is a schematic structural diagram of a support member in the battery cell shown in FIG. 8; and
FIG. 16 is a schematic structural diagram of a support member in a battery cell according to some embodiments of this application.

Reference numerals in the specific embodiments are as follows:
1. vehicle; 2. battery; 3. controller; 4. motor; 5. battery cell; 6. housing; 61. cover body; 62. base body;
51. electrode assembly; 511. first electrode plate body; 5111. body portion; 5112. flange portion; 512. second electrode plate body; 513. tab;
52. separator;
53. support member; 531. first plate body; 532. second plate body; 533. guide portion; 5331. first part; 5332. second part; 5333. groove; 534. lightening hole;
X. first direction; Y. second direction; and Z. third direction.

### DETAILED DESCRIPTION

To make the objectives, technical solutions, and advantages of embodiments of this application clearer, the following clearly describes the technical solutions in embodiments of this application with reference to the accompanying drawings in embodiments of this application. It is clear that the described embodiments are merely some rather than all of embodiments of this application. All other embodiments obtained by persons of ordinary skill in the art based on the embodiments of this application without creative efforts fall within the protection scope of this application.

Unless otherwise defined, all technical and scientific terms used in this application have same meanings as commonly understood by persons skilled in the technical field of this application. The terms used in the filed specification in this application are merely for an objective of describing specific embodiments, and are not intended to limit this application. The terms "comprise", "include" and any variations thereof in the specification and claims of this application and in the above descriptions of the accompanying drawings are intended to cover non-exclusive inclusion. The terms such as "first" and "second" in the specification and claims of this application or the foregoing accompanying drawings are only used to distinguish between different objects, but are not used to describe a specific order or a primary and secondary relationship.

Reference to "an embodiment" in this application means that a particular feature, structure or characteristic described in combination with the embodiment may be included in at least one embodiment of this application. The phrase shown in various locations in the specification may not necessarily refer to a same embodiment, and is not an independent or alternative embodiment exclusive from another embodiment.

In the description of this application, it needs to be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. Persons of ordinary skill in the art may understand specific meanings of the foregoing terms in this application according to specific cases.

The term "and/or" in this application describes only an association relationship for describing associated objects and represents that three relationships may exist. For example, A and/or B may represent the following three cases: Only A exists, both A and B exist, and only B exists. In addition, a character "I" in this application generally indicates an "or" relationship between contextually associated objects.

In the embodiments of this application, identical reference numerals designate identical components. For conciseness, detailed descriptions of identical components are omitted across different embodiments. It is to be understood that the dimensions including thicknesses, lengths, and widths of components illustrated in the embodiments of this application as well as dimensions such as the overall thickness, length, and width of the integrated device shown in the accompanying drawings are provided for exemplary purposes only and shall not be construed as limiting the scope of this application.

The term "a plurality of" as used in this application refers to two or more (inclusive of two).

The battery cell in this application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be cylindrical, flat-shaped, cuboid-shaped, or of another shape, which is also not limited in the embodiments of this application.

A battery mentioned in embodiments of this application is a single physical module including one or more battery cells to provide a higher voltage and a higher capacity. For example, the battery provided in this application may include a battery module, a battery pack, or the like. The battery generally includes a housing for packaging the one or more battery cells. The housing can reduce liquid or other foreign objects from affecting the charging or discharging of the battery cell.

The battery cell includes an electrode assembly and an electrolyte solution. The electrode assembly is formed by a positive electrode plate body, a negative electrode plate body, and a separator member. The battery cell works mainly relying on the movement of metal ions between the positive electrode plate body and the negative electrode plate body. The positive electrode plate body includes a positive electrode current collector and a positive electrode active material layer. The positive electrode active material layer is coated to a surface of the positive electrode current collector. The positive electrode current collector includes a positive electrode coating region and a positive electrode tab connected to the positive electrode coating region. The positive electrode coating region is coated with the positive electrode active material layer. The positive electrode tab is not coated with the positive electrode active material layer. A lithium-ion battery cell is used as an example. A material of the positive electrode current collector may be aluminum. The positive electrode active material layer includes a positive electrode active material. The positive electrode active material may be lithium cobalt oxide, lithium iron phosphate, ternary lithium, lithium manganese oxide, or the like. The negative electrode plate body includes a negative electrode current collector and a negative electrode active material layer. The negative electrode active material layer is coated to a surface of the negative electrode current collector. The negative electrode current collector includes a negative electrode coating region and a negative electrode tab connected to the negative electrode coating region. The negative electrode coating region is coated with the negative electrode active material layer. The negative electrode tab is not coated with negative electrode active material layer. A material of the negative electrode current collector may be copper. The negative electrode active material layer includes a negative electrode active material. The negative electrode active material may be carbon, silicon, lithium metal, or the like. A material of the separator member may be polypropylene (PP), polyethylene (PE), or the like.

A pouch-type battery cell typically includes an electrode assembly and an aluminum laminate film. The aluminum laminate film wraps the electrode assembly. Because vacuum sealing technology is adopted for the aluminum laminate film, the aluminum laminate film is subjected to compression from both external atmospheric pressure and potential compression from other components in the battery.

In the electrode assembly, the dimension of one of the positive electrode plate and the negative electrode plate in at least one direction of a length direction and a width direction is typically greater than that of the other one of the positive electrode plate and the negative electrode plate. The overall structural strength of a protruding region is weak. Therefore, as the battery cell expands, the protruding region is gradually compressed by the aluminum laminate film and other components and bends. As the expansion of the battery cell gradually decreases, the protruding region regains at least partial deformation. Therefore, during charging and discharging of the battery cell, the protruding region bends repeatedly. After repeated bending, fracture may occur in a boundary between the protruding region and a normal compression region. Burrs at edges of the fracture may pierce the separator, and a flange part that breaks off may bridge the positive electrode plate and the negative electrode plate to a short circuit to the positive electrode plate and the negative electrode plate, posing operational risks to the battery cell.

In view of this, this application provides a battery cell. In the battery cell, a support member is disposed in a separator. The support member is disposed on at least one side of an electrode assembly in a first direction, and covers at least part of one of flange portions and at least part of a body portion of a first electrode plate. In this way, the support member can support a protruding region, to mitigate the compression of an aluminum laminate film and other components on the flange portions, and mitigate the bending of the flange portions, and make the flange portions less likely to fracture, thereby lowering a short-circuit risk of the battery cell and improving the reliability of the battery cell.

The battery cell described in embodiments of this application is applicable to a battery and a power consuming apparatus using a battery.

The power consuming apparatus may be a vehicle, a mobile phone, a portable apparatus, a laptop computer, a ship, a spacecraft, an electronic toy, or an electric tool. The vehicle may be a fuel powered vehicle, a gas powered vehicle, or a new energy vehicle. The new energy vehicle may be a pure electric vehicle, a hybrid electric vehicle, or an extended range vehicle, etc. The spacecraft includes an airplane, a rocket, a space shuttle, a spaceship, and the like. The electronic toy includes a fixed or mobile electronic toy, for example, a game console, an electric vehicle toy, an electric ship toy, and an electric aircraft toy. The electric tool includes a metal-cutting power tool, a grinding power tool, an assembly power tool and a railway power tool, for example, an electric drill, an electric grinder, an electric wrench, an electric screwdriver, an electric hammer, an electric impact drill, a concrete vibrator, and an electric planer. The embodiments of this application do not impose specific limitations on the foregoing power consuming apparatus.

For ease of description in the following embodiments, an example in which a power consuming apparatus is a vehicle is used for description.

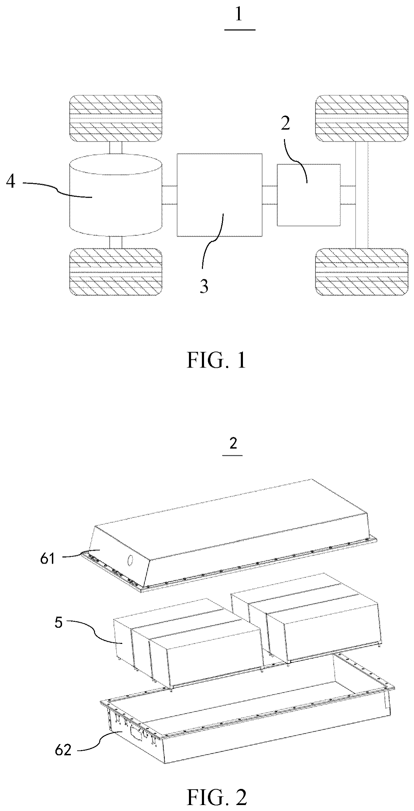

FIG. 1 is a schematic diagram of a structure of a vehicle according to some embodiments of this application.

As shown in FIG. 1, the inner part of a vehicle 1 is provided with a battery 2. The battery 2 may be disposed at the bottom, head, or tail of the vehicle 1. The battery 2 may be configured to supply power to the vehicle 1. For example, the battery 2 may be used as a power source for operating the vehicle 1.

The vehicle 1 may further include a controller 3 and a motor 4. The controller 3 is configured to control the battery 2 to supply power to the motor 4, for example, to meet operating power requirements during starting, navigation, and traveling of the vehicle 1.

In some embodiments of this application, the battery 2 can not only serve as a power source for operating the vehicle 1, but can also serve as a power source for driving the vehicle 1, in place of or partially in place of fuel or natural gas, to provide driving power for the vehicle 1.

FIG. 2 is a schematic structural diagram of a battery according to some embodiments of this application.

As shown in FIG. 2, the battery 2 includes a housing 6 and a battery cell 5. The housing 6 has an accommodating space. The battery cell 5 is disposed in the accommodating space.

The housing 6 is configured to provide the accommodating space for the battery cell 5. The housing 6 may use a variety of structures. In some embodiments, the housing 6 may include a cover body 61 and a base body 62. The cover body 61 and the base body 62 cover each other. The cover body 61 and the base body 62 jointly define the accommodating space for accommodating the battery cell 5. The base body 62 may be a hollow structure with an opening at one end, the cover body 61 may be a plate-like structure, and the cover body 61 covers an opening side of the base body 62, so that the cover body 61 and the base body 62 jointly define the accommodating space. Alternatively, the cover body 61 and the base body 62 each may be a hollow structure with an opening on one side, and an opening side of the cover body 61 covers an opening side of the base body 62. Certainly, the housing 6 formed by the cover body 61 and the base body 62 may be in various shapes, such as a cylinder, and a cuboid.

In the battery 2, one or more battery cells 5 may be provided. If a plurality of battery cells 5 are provided, the plurality of battery cells 5 may be connected in series, parallel, or series-parallel. Series-parallel connection means that both series connection and parallel connection exist among the plurality of battery cells 5. The plurality of battery cells 5 may be directly connected in series, parallel, or series-parallel together, and then the whole formed by the plurality of battery cells 5 may be accommodated in the housing 6. Certainly, alternatively, a battery module may be formed by a plurality of battery cells 5 that are first connected in series, parallel, or series-parallel, and a plurality of battery modules are then connected in series, parallel, or series-parallel to form a whole and accommodated in the housing 6.

Each battery cell 5 may be a secondary battery or a primary battery; or may be a lithium-sulfur battery, a sodium-ion battery, or a magnesium-ion battery, but is not limited thereto.

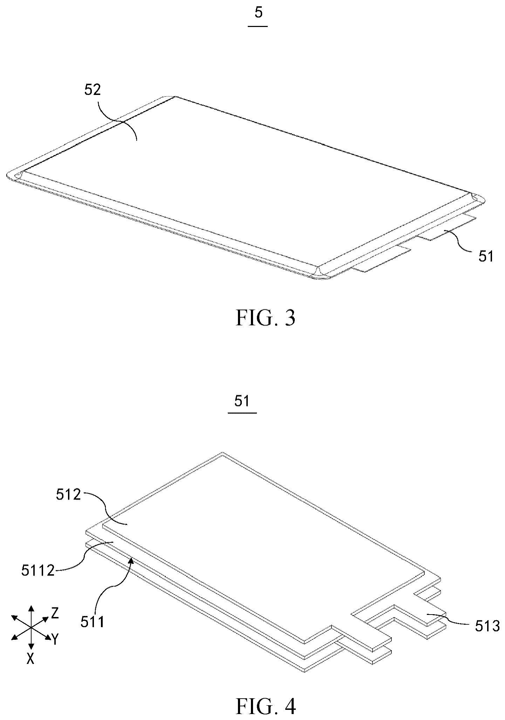

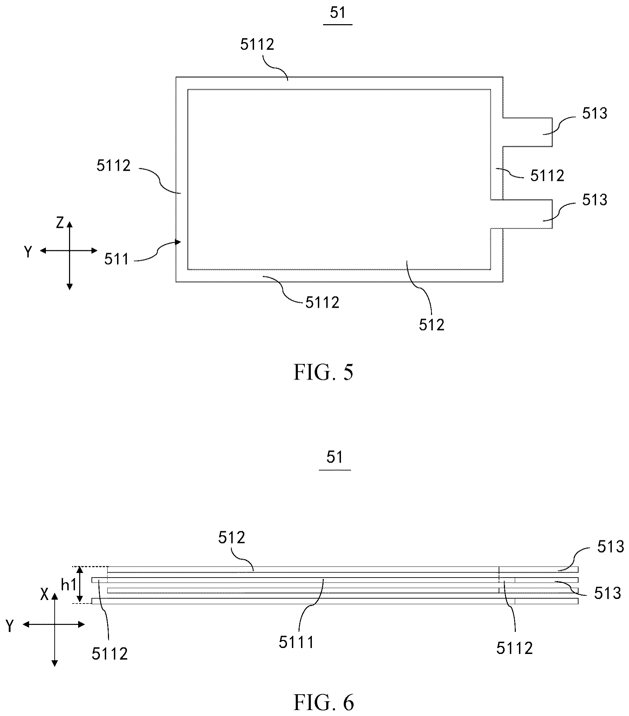

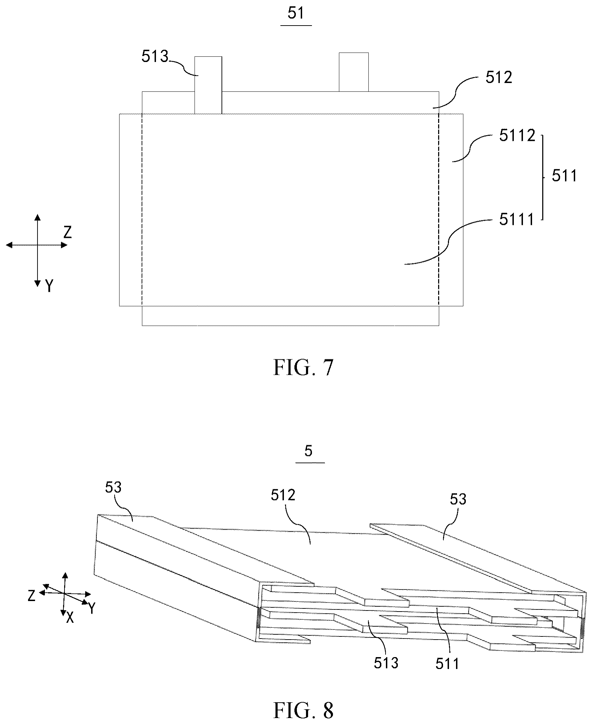

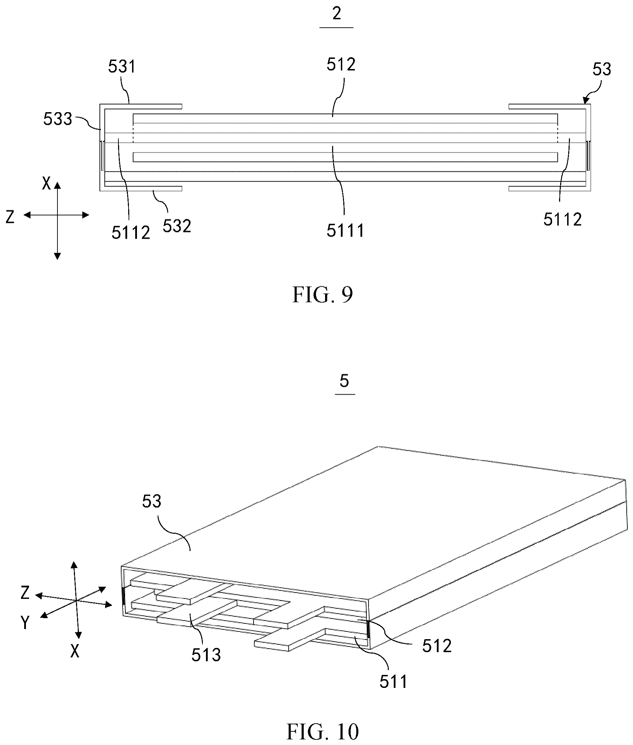

FIG. 3 is a schematic structural diagram of a battery cell according to some embodiments of this application. FIG. 4 is a schematic structural diagram of an electrode assembly in a battery cell according to some embodiments of this application. FIG. 5 is a top view of the electrode assembly shown in FIG. 4. FIG. 6 is a left view of the electrode assembly shown in FIG. 4. FIG. 7 is another schematic structural diagram of an electrode assembly in a battery cell according to some embodiments of this application. FIG. 8 is a partial schematic structural diagram of a battery cell according to some embodiments of this application. FIG. 9 is a rear view of the battery cell shown in FIG. 8.

As shown in FIG. 3 to FIG. 9, this application further provides a battery cell 5, including an electrode assembly 51, a separator 52, and a support member 53. The electrode assembly 51 includes a first electrode plate body 511 and a second electrode plate body 512 that have opposite polarities and are stacked in a first direction X. The first electrode plate body 511 includes a body portion 5111 and flange portions 5112. A projection of the body portion 5111 onto the second electrode plate body 512 in the first direction X overlaps at least part of the second electrode plate body 512. The flange portions 5112 are connected to at least part of a peripheral side of the body portion 5111 and protrude from an outer edge of the second electrode plate body 512. The separator 52 wraps the electrode assembly 51. The support member 53 is located in the separator 52. The support member 53 is disposed on at least one side of the electrode assembly 51 in the first direction X. A projection of the support member 53 onto the first electrode plate body 511 in the first direction X covers at least part of one of the flange portions 5112 and at least part of the body portion 5111.

It needs to be noted that neither of the first electrode plate body 511 and the second electrode plate body 512 in the embodiments of this application includes a tab 513.

The first electrode plate body 511 in the embodiments of this application may be a positive electrode plate or may be a negative electrode plate.

Both a plurality of first electrode plate bodies 511 and a plurality of second electrode plate bodies 512 are provided in the embodiments of this application. For example, the plurality of first electrode plate bodies 511 and the plurality of second electrode plate bodies 512 are alternately disposed in the first direction X.

In the embodiments of this application, the projection of the body portion 5111 onto the second electrode plate body 512 in the first direction X overlaps at least part of the second electrode plate body 512. That is to say, the projection of the body portion 5111 onto the second electrode plate body 512 in the first direction X may overlap the entire second electrode plate body 512, as shown in FIG. 4 to FIG. 6, or may overlap only part of the second electrode plate body 512, as shown in FIG. 7. The electrode assembly 51 has a second direction Y and a third direction Z. The second direction Y is parallel to an arrangement direction from a top end to a bottom end of the electrode assembly. The third direction Z and the second direction Y intersect. The tab 513 is provided at the top end of the electrode assembly. In the third direction Z, the flange portions 5112 protrude from two sides of the second electrode plate body 512 facing away from each other. In the second direction Y, the second electrode plate body 512 protrudes from two sides of the first electrode plate body 511 facing away from each other. Certainly, the arrangement may be reversed. In the second direction Y, the flange portions 5112 protrude from two sides of the second electrode plate body 512 facing away from each other. In the third direction Z, the second electrode plate body 512 protrude from two sides of the first electrode plate body 511 facing away from each other.

The flange portions 5112 in the embodiments of this application are connected to at least part of the peripheral side of the body portion 5111. For example, the flange portions 5112 and the body portion 5111 are integrally formed.

That the flange portions 5112 in the embodiments of this application protrude from the outer edge of the second electrode plate body 512 means that the flange portions 5112 protrude from the outer edge of the second electrode plate body 512 in an extension direction of a surface with the largest area of the first electrode plate body 511. The support member 53 in the embodiments of this application is wrapped in the separator 52. The support member 53 may be laminated on a side of the electrode assembly 51 in the first direction X, or may be laminated on two sides of the electrode assembly 51 facing away from each other in the first direction X. For example, the support member 53 abuts against the electrode assembly 51.

The support member 53 in the embodiments of this application covers at least part of the body portion 5111. For example, the support member 53 covers the flange portions 5112 and extends toward an inner side to cover at least part of the body portion 5111.

For example, the support member 53 is plate-shaped. Optionally, the thickness of the support member 53 ranges from 0.05 mm to 3 mm.

The support member 53 in the embodiments of this application may be made of a metal material, for example, stainless steel, titanium, or nickel, or may be made of rigid plastic or a composite panel.

For the battery cell 5 in the embodiments of this application, the support member 53 is disposed on at least one side of the electrode assembly 51. The support member 53 covers both at least part of the flange portion 5112 and at least part of the body portion 5111. Under the support of the body portion 5111, the support member 53 can form support for the flange portions 5112 to reduce the compression of an aluminum laminate film and other components on the flange portions 5112, mitigate the bending and fracture of the flange portions 5112, and reduce piercing of the separator and bridging between the first electrode plate body 511 and the second electrode plate body 512, thereby lowering a short-circuit risk of the battery cell 5 and improving the reliability of the battery cell 5.

In addition, when the flange portions 5112 are coated with an active material, active material shedding may occur during bending. The shed active material comes into contact with opposite-polarity electrode plates to trigger chemical reactions, resulting in the self-discharge of the battery cell 5 and causing reduced capacity of the battery cell 5. Therefore, the support member 53 supports the flange portions 5112, so that the self-discharge of the battery cell 5 can be further mitigated, thereby increasing the capacity of the battery cell 5.

Moreover, the support member 53 in the embodiments of this application can also serve as positioning reference when battery cells are assembled into a battery module, thereby reducing alignment deviations of the battery cell 5 during the module assembly.

In some embodiments, the projection of the body portion 5111 onto the second electrode plate body 512 in the first direction X overlaps the entire second electrode plate body 512. The flange portions 5112 are circumferentially connected to the peripheral side of the body portion 5111.

The area of the first electrode plate body 511 in the embodiments of this application is greater than that of the second electrode plate body 512. The flange portions 5112 are circumferentially disposed around the body portion 5111. That is to say, the flange portions 5112 protrude from the entire peripheral side of the second electrode plate body 512.

For example, the first electrode plate body 511 is a negative electrode plate, and the second electrode plate body 512 is a positive electrode plate.

With such an arrangement, the flange portions 5112 protrude from the entire peripheral side of the second electrode plate body 512, thereby accommodating process deviations to enable more orderly and controllable stacking of the first electrode plate body 511 and the second electrode plate body 512, and further facilitating the control of an active material coating area and also facilitating manufacturing and assembly.

In some embodiments, the flange portions 5112 protrude from two sides of the second electrode plate body 512 facing away from each other in the third direction Z. The projection of the support member 53 onto the first electrode plate body 511 in the first direction X covers at least part of the flange portion 5112 on at least one side of the two sides facing away from each other. The third direction Z, the first direction X, and a second direction Y intersect pairwise. The second direction Y is parallel to an arrangement direction from a top end to a bottom end of the electrode assembly 51. The electrode assembly 51 further includes a tab 513. The tab 513 is located at the top end.

The projection of the support member 53 in the embodiments of this application onto the first electrode plate body 511 in the first direction X covers at least part of the flange portion 5112 protruding from at least one side of the two sides of the second electrode plate body 512 facing away from each other in the third direction Z. In addition to the at least part of the flange portions 5112 on the at least one side, the projection of the support member 53 in the embodiments of this application onto the first electrode plate body 511 in the first direction X further covers at least part of the body portion 5111.

Optionally, the support member 53 is a plate-shaped member.

Optionally, the third direction Z, the first direction X, and the second direction Y are perpendicular pairwise.

The flange portions 5112 located on two sides of the first electrode plate body 511 facing away from each other in the third direction Z are more prone to bending under compression. Therefore, the projection of the support member 53 onto the first electrode plate body 511 in the first direction X covers at least part of the flange portion 5112 on at least one side of the two sides facing away from each other, so that the bending and fracture of the part of the flange portion 5112 can be mitigated, thereby improving the reliability of the battery cell 5.

In some embodiments, the projection of the support member 53 onto the first electrode plate body 511 in the first direction X covers the entire flange portion 5112 on one side of the two sides facing away from each other.

In the embodiments of this application, the projection of one support member 53 onto the first electrode plate body 511 in the first direction X covers the entire flange portion 5112 on one side of the sides.

In this way, the support member 53 may support the region of the entire side of the flange portion 5112 protruding in the third direction Z, so that a support area is large, to further reduce the compression of the aluminum laminate film and other components on the flange portions 5112, mitigate the bending of the flange portions 5112, and make the flange portions 5112 less likely to fracture, thereby improving the use reliability of the battery cell 5.

In some embodiments, two support members 53 are provided. A projection of one of the support members 53 onto the first electrode plate body 511 in the first direction X covers the flange portion 5112 on one side of the two sides facing away from each other. A projection of the other one of the support members 53 onto the first electrode plate body 511 in the first direction X covers the flange portion 5112 on the other side of the two sides facing away from each other.

The two support members 53 in the embodiments of this application may be spaced apart from or abut against each other in the third direction Z. The dimensions of the two support members 53 may be the same or may be different.

Two support members 53 are provided. The two support members 53 may form support for the body portion 5111 along the flange portions 5112 on two sides facing away from each other in the third direction Z, to mitigate the bending on two sides and make the flange portions 5112 less likely to fracture, thereby improving the use reliability of the battery cell 5.

In addition, the pressure distribution on two sides of the electrode assembly 51 facing away from each other in the third direction Z may be more uniform. When lithium metal is used as the negative electrode material, lithium metal can be deposited more densely, and the thickness variation between the two sides and the central region is relatively uniform, to further make the flange portions 5112 less likely to fracture due to nonuniform thickness variation of the battery cell, thereby improving the reliability of the battery cell 5.

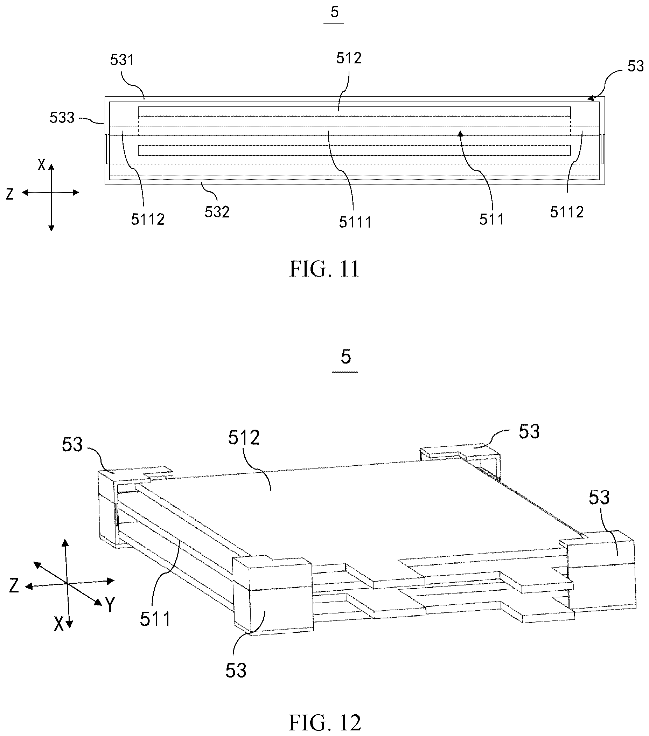

FIG. 10 is another partial schematic structural diagram of a battery cell according to some embodiments of this application. FIG. 11 is a rear view of the battery cell shown in FIG. 10.

As shown in FIG. 10 and FIG. 11, in some embodiments, the projection of the support member 53 onto the first electrode plate body 511 in the first direction X covers the entire first electrode plate body 511.

With such an arrangement, the support area of the support member 53 can be further increased, to mitigate the compression on the first electrode plate body 511, mitigate the bending of the flange portions 5112, and make the flange portions 5112 less likely to fracture, thereby improving the use reliability of the battery cell 5. In addition, when lithium metal is used as the negative electrode material, the arrangement manner further improves the uniformity of the force bearing of the body portion 5111 and the flange portions 5112 of the first electrode plate body 511, to improve the deposition uniformity of lithium metal for more consistent performance, and make the flange portions 5112 less likely to fracture due to nonuniform thickness variation of the battery cell 5, thereby improving the reliability of the battery cell 5.

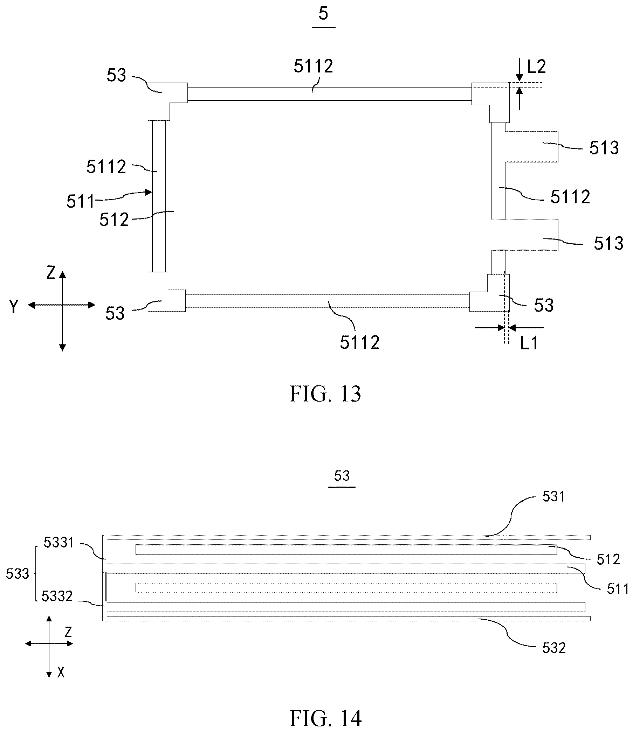

FIG. 12 is yet another partial schematic structural diagram of a battery cell according to some embodiments of this application. FIG. 13 is a top view of the battery cell shown in FIG. 12.

As shown in FIG. 12 and FIG. 13, a plurality of support members 53 are provided. The plurality of support members 53 are disposed at intervals in the second direction Y.

The plurality of support members 53 in the embodiments of this application may be disposed at intervals disposed in the second direction Y on one of the two sides of the electrode assembly 51 facing away from each other in the third direction Z. The plurality of support members 53 may alternatively be disposed at intervals in the second direction Y on two sides of the electrode assembly 51 facing away from each other in the third direction Z. That is to say, the plurality of support members 53 are disposed at intervals in the second direction Y on each side.

The plurality of support members 53 are disposed at intervals in the second direction Y. In this way, the total weight of the plurality of support members 53 can be reduced while mitigating bending, thereby increasing the energy density of the battery cell 5.

In some embodiments, the projection of the body portion 5111 onto the second electrode plate body 512 in the first direction X overlaps the entire second electrode plate body 512. The flange portions 5112 are circumferentially connected to the peripheral side of the body portion 5111. Two adjacent flange portions 5112 are disposed at an included angle. The projection of the support member 53 onto the first electrode plate body 511 in the first direction X covers at least one junction region between two flange portions 5112 disposed at an included angle.

The included angle formed between two adjacent flange portions 5112 in the embodiments of this application may be an acute angle, an obtuse angle, or a right angle.

The junction region between two flange portions 5112 in the embodiments of this application is a connection portion between the two flange portions 5112, and includes portions of the two flange portions 5112.

The support member 53 is disposed at a junction region between two flange portions 5112. The junction region is highly susceptible to compression. Therefore, the bending of the flange portions can be further mitigated, making the flange portions 5112 less likely to fracture. In addition, the junction region is a connection position between two flange portions 5112. Therefore, both the flange portions 5112 disposed at an included angle may be protected.

Optionally, four flange portions 5112 are circumferentially arranged to form four corners. Four support members 53 are provided. Projections of the four support members 53 onto the first electrode plate body 511 in the first direction X respectively cover the four corners. The four support members 53 are disposed in a one-to-one correspondence with the four corners.

FIG. 14 is still another partial schematic structural diagram of a battery cell according to some embodiments of this application. Referring to FIG. 9, FIG. 11, FIG. 12, and FIG. 14, in some embodiments, the support member 53 includes a first plate body 531 and a second plate body 532 that are disposed opposite in the first direction X. The first plate body 531 is laminated on one side of the electrode assembly 51 in the first direction X. The second plate body 532 is laminated on the other side of the electrode assembly 51 in the first direction X. Respective projections of the first plate body 531 and the second plate body 532 onto the electrode assembly 51 in the first direction X cover at least part of the flange portion 5112 and at least part of the body portion 5111.

That the first plate body 531 and the second plate body 532 in the embodiments of this application are disposed opposite in the first direction X does not necessarily mean that the two are definitely disposed parallel to each other. One of the first plate body 531 and the second plate body 532 may be disposed obliquely with respect to the other one of the first plate body 531 and the second plate body 532. Optionally, the first plate body 531 and the second plate body 532 are disposed parallel to each other.

Both the first plate body 531 and the second plate body 532 in the embodiments of this application cover the flange portion 5112 and the body portion 5111. The dimensions of the first plate body 531 and the second plate body 532 in the embodiments of this application may be the same or may be different.

When both the projections of the first plate body 531 and the second plate body 532 in the embodiments of this application onto the electrode assembly 51 in the first direction X cover part of the flange portion 5112, areas where the projections of the first plate body 531 and the second plate body 532 onto the electrode assembly 51 in the first direction X cover the flange portion 5112 may be the same or may be different. When both the projections of the first plate body 531 and the second plate body 532 in the embodiments of this application onto the electrode assembly 51 in the first direction X cover part of the body portion 5111, areas where the projections of the first plate body 531 and the second plate body 532 onto the electrode assembly 51 in the first direction X cover the body portion 5111 may be the same or may be different.

The first plate body 531 and the second plate body 532 in the embodiments of this application may be disposed at intervals without being connected or may be connected.

The support member 53 is configured to include the first plate body 531 and the second plate body 532. The first plate body 531 and the second plate body 532 are located at two sides of the electrode assembly 51 facing away from each other in the first direction X. In this way, the first plate body 531 and the second plate body 532 may form support for more flange portions 5112 arranged in the first direction X, to mitigate the compression of aluminum laminate films on two sides of the electrode assembly 51 facing away from each other in the first direction X on the plurality of flange portions 5112, and mitigate the bending and fracture of more flange portions 5112, thereby further improving the reliability of the battery cell 5.

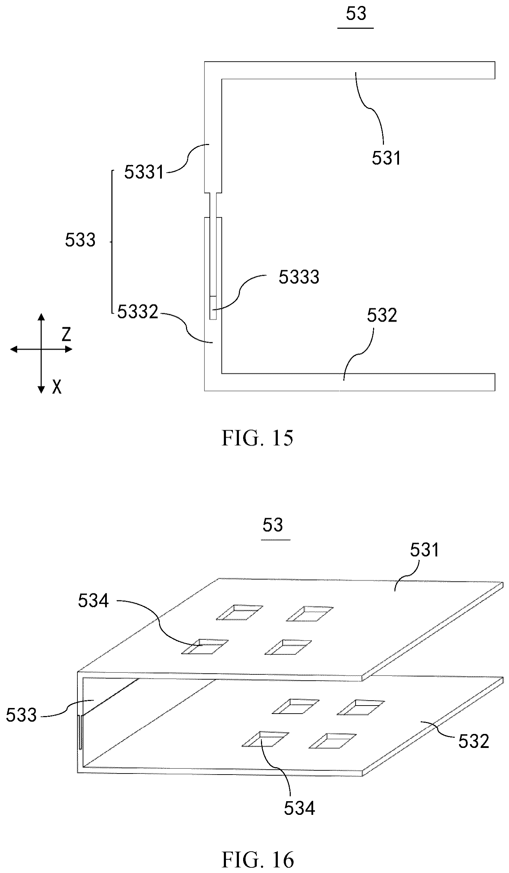

FIG. 15 is a schematic structural diagram of a support member in the battery cell shown in FIG. 8.

Referring to FIG. 15, in some embodiments, the support member 53 further includes a guide portion 533. The guide portion 533 includes a first part 5331 and a second part 5332. The first part 5331 is connected to one of the first plate body 531 and the second plate body 532. The second part 5332 is connected to the other one of the first plate body 531 and the second plate body 532. The first part 5331 is slidable or rollable in the first direction X along the second part 5332. The first part 5331 and the second part 5332 are configured to guide opposite movements of the first plate body 531 and the second plate body 532 in the first direction X.

In the embodiments of this application, an included angle is formed between the first part 5331 and the first plate body 531, and an included angle is formed between the second part 5332 and the second plate body 532. Optionally, the first part 5331 and the first plate body 531 are connected at a right angle, and the second part 5332 and the second plate body 532 are connected at a right angle.

The first part 5331 and the second part 5332 in the embodiments of this application are connected to end portions of the first plate body 531 and the second plate body 532 on the same side, and may be connected to end portions of the first plate body 531 and the second plate body 532 on one side, two sides, three sides, or the like.

Both the first part 5331 and the second part 5332 in the embodiments of this application may be plate structures, and side surfaces of the first part 5331 and the second part 5332 abut against each other. In a process of the first plate body 531 and the second plate body 532 moving toward or away from each other, the side surfaces of the two plate structures remain abutting against each other, so that the first plate body 531 and the second plate body 532 are guided and limited through the first part 5331 and the second part 5332. For yet another example, the first part 5331 is an inner tube, and the second part is an outer tube. The inner tube and the outer tube are engaged through insertion. The inner tube is slidable in the outer tube in the first direction X, so that the first plate body 531 and the second plate body 532 are guided and limited during movements in the first direction X.

When the first part 5331 rolls along the second part 5332 in the first direction X, that is to say, the first part 5331 is provided with a rolling member, for example, a roller, thereby achieving a rolling fit with the second part 5332.

The guide portion 533 is disposed to guide the movements of the first plate body 531 and the second plate body 532 in the first direction X, to mitigate displacements of the first plate body 531 and the second plate body 532 in another direction, for example, the third direction Z, during movements, thereby improving the support capability of the first plate body 531 and the second plate body 532 for the flange portions 5112.

In some embodiments, the flange portions 5112 protrude from the two sides of the second electrode plate body 512 facing away from each other in the third direction Z. The guide portion 533 is connected to one end of two ends of the first plate body 531 facing away from each other in the third direction Z. The third direction Z, the first direction X, and the second direction Y intersect pairwise. The second direction Y is parallel to the arrangement direction from the top end to the bottom end of the electrode assembly 51. The electrode assembly 51 further includes the tab 513. The tab 513 is located at the top end.

The guide portion 533 in the embodiments of this application is connected to one end of two ends of the first plate body 531 facing away from each other in the third direction Z. Because the guide portion 533 is connected to end portions of the first plate body 531 and the second plate body 532 on the same side, the guide portion 533 is also connected to the end of the second plate body 532.

The guide portion 533 in the embodiments of this application may extend to the entire first plate body 531 in the second direction Y, or may be connected to only part of the first plate body 531 in the second direction Y.

Projections of the first plate body 531 and the second plate body 532 in the embodiments of this application onto the first electrode plate body 511 in the first direction X may cover the entire flange portion 5112 on one side in the third direction Z, as shown in FIG. 8, or may cover part of the flange portion 5112 on one side in the third direction Z, as shown in FIG. 12, or may cover the flange portions 5112 on two sides facing away from each other in the third direction Z, as shown in FIG. 14.

For example, the support member 53 is circumferentially arranged to form a U-shaped structure.

The guide portion 533 of the support member 53 is connected to one end of the two ends of the first plate body 531 facing away from each other in the third direction Z. In this way, the guide portion 533 hardly interferes with the tab 513, and the assembly of the support member 53 is facilitated.

Referring to FIG. 10 and FIG. 11, in some embodiments, the flange portions 5112 protrude from the two sides of the second electrode plate body 512 facing away from each other in the third direction Z. Two guide portions 533 are provided. The two guide portions 533 are connected to two ends of the first plate body 531 facing away from each other in the third direction Z. The third direction Z, the first direction X, and the second direction Y intersect pairwise. The second direction Y is parallel to the arrangement direction from the top end to the bottom end of the electrode assembly 51. The electrode assembly 51 further includes the tab 513. The tab 513 is located at the top end.

Two guide portions 533 are provided in the embodiments of this application. One of the guide portions 533 is connected to one end of each of the first plate body 531 and the second plate body 532 in the third direction Z, and the other one of the guide portions 533 is connected to the other end of each of the first plate body 531 and the second plate body 532 in the third direction Z. That is to say, the first plate body 531, the second plate body 532, and the two guide portions 533 are circumferentially arranged to form an ring structure. Optionally, the first plate body 531, the second plate body 532, and the guide portion 533 are circumferentially arranged to form a rectangular ring structure.

The guide portion 533 is connected to two ends of the first plate body 531 facing away from each other in the third direction Z. That is to say, the support member 53 can be circumferentially arranged to form an annular structure, and may support both flange portions 5112 on two sides in the third direction Z. In addition, the displacements of the first plate body 531 and the second plate body 532 can be further limited, to reduce the displacements of the first plate body 531 and the second plate body 532 in another direction, for example, the third direction Z, thereby improving the support capability of the first plate body 531 and the second plate body 532 for the flange portions 5112.

In some embodiments, a groove 5333 is formed in the second part 5332. The first part 5331 is engaged with the groove 5333 of the second part 5332 through insertion. The first part 5331 is slidable along side walls of the groove 5333 in the first direction X.

The first part 5331 in the embodiments of this application may be directly inserted into the groove 5333, or may be thinned and inserted into the groove 5333, or engaged with the groove 5333 through insertion in another manner.

The groove 5333 in the embodiments of this application may be provided with an opening on only a side facing the first part 5331, or may be provided with a plurality of openings.

Optionally, both the first part 5331 and the second part 5332 have a plate-like form.

The first part 5331 is engaged with the groove 5333 of the second part 5332 through insertion. This arrangement manner facilitates assembly, and can better limit the first plate body 531 and the second plate body 532 in another direction, for example, the third direction Z, i.e., bidirectionally in the third direction Z, to further mitigate the misalignment between the first plate body 531 and the second plate body 532, thereby improving the support of the first plate body 531 and the second plate body 532 for the flange portions 5112.

Optionally, the groove 5333 includes a bottom wall and four side walls. The four side walls are connected in sequence at angles and form the groove 5333 with the bottom wall. With such an arrangement, both movements of the first plate body 531 and the second plate body 532 in other directions such as the second direction Y and the third direction Z may be further limited, to mitigate the misalignment between the first plate body 531 and the second plate body 532, thereby improving the support of the first plate body 531 and the second plate body 532 for the flange portions 5112.

Further optionally, the first part 5331 abuts against all the four side walls.

In some embodiments, a maximum deformation dimension of the guide portion 533 in the first direction X is greater than or equal to a maximum expansion dimension of the electrode assembly 51 in the first direction X. The maximum expansion dimension is a maximum dimension of the electrode assembly 51 in the first direction X minus an initial dimension of the electrode assembly 51 in the first direction X.

The maximum deformation dimension of the guide portion 533 in the embodiments of this application in the first direction X is a maximum extension/contraction range of the guide portion 533 in the first direction X.

The maximum expansion dimension of the electrode assembly 51 in the first direction X in the embodiments of this application is a maximum expansion range of the electrode assembly 51 in the first direction X.

The initial dimension of the electrode assembly 51 in the first direction X in the embodiments of this application is a thickness of the electrode assembly 51 after electrolyte filling and prior to charging and discharging.

A maximum deformation dimension of the guide portion 533 in the first direction X is configured to be greater than or equal to a maximum expansion dimension of the electrode assembly 51 in the first direction X. In this way, the guide portion 533 may keep providing guide as the thickness of the electrode assembly 51 changes, to mitigate the misalignment between the first plate body 531 and the second plate body 532.

Referring to FIG. 6, in some embodiments, the initial dimension of the electrode assembly 51 in the first direction X is h1. The maximum deformation dimension of the guide portion 533 in the first direction X is greater than or equal to 0.7h1.

The maximum deformation dimension of the guide portion 533 in the first direction X is configured to be greater than or equal to 0.7h1, so that the guide portion 533 may meet maximum expansion range requirements of most electrode assemblies 51 in the first direction X, thereby improving the applicability of the support member 53.

Referring to FIG. 13, in some embodiments, the flange portions 5112 protrude from two sides of the second electrode plate body 512 facing away from each other in a second direction Y. The support member 53 protrudes from at least one side of the two sides of the first electrode plate body 511 facing away from each other in the second direction Y. The second direction Y is parallel to an arrangement direction from a top end to a bottom end of the electrode assembly 51. The electrode assembly 51 further includes a tab 513. The tab 513 is located at the top end.

That the flange portions 5112 in the embodiments of this application protrude from two sides of the second electrode plate body 512 facing away from each other in the second direction Y is that the flange portions 5112 protrude in an extension direction of the largest surface of the first electrode plate body 511 from the two sides of the second electrode plate body 512 facing away from each other in the second direction Y.

That the support member 53 in the embodiments of this application protrudes from at least one side of two sides of the first electrode plate body 511 facing away from each other in the second direction Y is that the support member 53 protrudes in the extension direction of the largest surface of the first electrode plate body 511 from at least one side of two sides of the first electrode plate body 511 facing away from each other in the second direction Y.

When the support member 53 in the embodiments of this application protrudes from a side of the first electrode plate body 511 in the second direction Y, the support member 53 may protrude from the entire side of the first electrode plate body 511 in the second direction Y, or the support member 53 may protrude from part of a side surface of the first electrode plate body 511 in the second direction Y.

With such an arrangement, the support member 53 can maximally support edge regions of the flange portions 5112 in the second direction Y, to improve the support of the support member 53 for the flange portions 5112, further mitigate the compression of the aluminum laminate film and other components on edges of the flange portions 5112, and mitigate the bending and fracture of the flange portions 5112, thereby improving the reliability of the battery cell 5.

In some embodiments, the support member 53 protrudes in the second direction Y from two sides of the first electrode plate body 511 facing away from each other. A dimension of the support member 53 protruding in the second direction Y from either side of the first electrode plate body 511 is L1. L1 satisfies 0.5 mm ≤ L1 ≤ 5 mm.

Optionally, L1 is 0.5 mm, 0.8 mm, 1 mm, 1.2 mm, 1.5 mm, 2 mm, 3 mm, 4 mm, or 5 mm.

Dimensions of the support member 53 protruding in the second direction Y from two sides of the first electrode plate body 511 facing away from each other may be the same or may be different.

The dimension of the support member 53 protruding in the second direction Y from the flange portion 5112 is limited to be greater than or equal to 0.5 mm, thereby facilitating manufacturing. The dimension of the support member 53 protruding in the second direction Y from the flange portion 5112 is limited to be less than or equal to 5 mm, so that the occupied space and weight of the support member 53 can be reduced, thereby improving the energy density of the battery cell 5.

In some embodiments, L1 satisfies 0.5 mm ≤ L1 ≤ 1.5 mm.

Optionally, L1 is 0.5 mm, 0.8 mm, 1 mm, 1.1 mm, 1.2 mm, 1.3 mm, 1.4 mm, or 1.5 mm.

The dimension of the support member 53 protruding in the second direction Y from the flange portion 5112 is limited to be less than or equal to 1.5 mm, so that the occupied space and weight of the support member 53 in the second direction Y can be further reduced, thereby improving the energy density of the battery cell 5.

In some embodiments, the flange portions 5112 protrude from two sides of the second electrode plate body 512 facing away from each other in a third direction Z. The support member 53 protrudes from at least one side of two sides of the first electrode plate body 511 facing away from each other in the third direction Z. The third direction Z, the first direction X, and a second direction Y intersect pairwise. The second direction Y is parallel to an arrangement direction from a top end to a bottom end of the electrode assembly 51. The electrode assembly 51 further includes a tab 513. The tab 513 is disposed at the top end.

That the flange portions 5112 in the embodiments of this application protrude from two sides of the second electrode plate body 512 facing away from each other in the third direction Z is that the flange portions 5112 protrude in the extension direction of the largest surface of the first electrode plate body 511 from two sides of the second electrode plate body 512 facing away from each other in the third direction Z.

That the support member 53 in the embodiments of this application protrudes from at least one side of the two sides of the first electrode plate body 511 facing away from each other in the third direction Z is that the support member 53 protrudes in the extension direction of the largest surface of the first electrode plate body 511 from at least one side of the two sides of the first electrode plate body 511 facing away from each other in the third direction Z.

When the support member 53 in the embodiments of this application protrudes from a side of the two sides of the first electrode plate body 511 facing away from each other in the third direction Z, the support member 53 may protrude from the entire side of the first electrode plate body 511 in the third direction Z, or the support member 53 may protrude from part of a side surface of the first electrode plate body 511 in the third direction Z.

Optionally, the first direction X, the second direction Y, and the third direction Z are perpendicular pairwise.

With such an arrangement, the support member 53 can maximally support edge regions of the flange portions 5112 in the third direction Z, to improve the support of the support member 53 for the flange portions 5112, further mitigate the compression of an aluminum laminate film and other components on the flange portions 5112, and mitigate the bending and fracture of the flange portions 5112, thereby improving the reliability of the battery cell 5.

In some embodiments, the support member 53 protrudes in the third direction Z from two sides of the first electrode plate body 511 facing away from each other. A dimension of the support member 53 protruding in the third direction Z from either side of the first electrode plate body 511 is L2. L2 satisfies 0.5 mm ≤ L2 ≤ 5 mm.

Optionally, L2 is 0.5 mm, 0.8 mm, 1 mm, 1.2 mm, 1.5 mm, 2 mm, 3 mm, 4 mm, or 5 mm.

Dimensions of the support member 53 in the embodiments of this application protruding in the third direction Z from two sides of the first electrode plate body 511 facing away from each other may be the same or may be different.

The dimension of the support member 53 protruding in the third direction Z from the flange portion 5112 is limited to be greater than or equal to 0.5 mm, thereby facilitating manufacturing. The dimension of the support member 53 protruding in the third direction Z from the flange portion 5112 is limited to be less than or equal to 5 mm, so that the occupied space and weight of the support member 53 can be reduced, thereby improving the energy density of the battery cell 5.

In some embodiments, L2 satisfies 0.5 mm ≤ L2 ≤ 1.5 mm.

Optionally, L2 is 0.5 mm, 0.8 mm, 1 mm, 1.1 mm, 1.2 mm, 1.3 mm, 1.4 mm, or 1.5 mm.

The dimension of the support member 53 protruding in the third direction Z from the flange portion 5112 is limited to be less than or equal to 1.5 mm, so that the occupied space and weight of the support member 53 in the third direction Z can be further reduced, thereby improving the energy density of the battery cell 5.

FIG. 16 is a schematic structural diagram of a support member in a battery cell according to some embodiments of this application.

Referring to FIG. 16, in some embodiments, the support member 53 is provided with a lightening hole 534.

One or more lightening holes 534 may be provided. When a plurality of lightening holes 534 are provided, the plurality of lightening holes 534 may be arranged in an array or may be scattered.

The lightening hole 534 is provided, so that the weight of the support member 53 can be reduced, thereby increasing the energy density of the battery cell 5.

In some embodiments, the battery cell 5 is a pouch-type stacked battery cell.

The separator 52 of the pouch-type stacked battery cell 5 has low structural strength, and therefore is prone to the problem of compression on the edges of the electrode assembly 51. The support member 53 is disposed in the separator 52, so that the compression on the flange portions 5112 can be reduced, to mitigate the bending of the flange portions 5112 and reduce the possibility of fracture, thereby improving the reliability of the pouch-type battery cell 5.

Embodiments of this application further provide a battery 2, including the foregoing battery cell 5.

Embodiments of this application further provide a power consuming apparatus, including the foregoing battery 2.

Referring to FIG. 3 to FIG. 6, FIG. 8, and FIG. 9, embodiments of this application provide a battery cell 5, including an electrode assembly 51, a separator 52, and a support member 53. The electrode assembly 51 includes a first electrode plate body 511 and a second electrode plate body 512 that have opposite polarities and are stacked in a first direction X. The first electrode plate body 511 includes a body portion 5111 and flange portions 5112. A projection of the body portion 5111 onto the second electrode plate body 512 in the first direction X overlaps at least part of the second electrode plate body 512. The flange portions 5112 are connected to at least part of a peripheral side of the body portion 5111 and protrude from an outer edge of the second electrode plate body 512. The separator 52 wraps the electrode assembly 51. The support member 53 is located in the separator 52. The support member 53 is disposed on at least one side of the electrode assembly 51 in the first direction X, and a projection of the support member 53 onto the first electrode plate body 511 in the first direction X covers at least part of one of the flange portions 5112 and at least part of the body portion 5111. The projection of the body portion 5111 onto the second electrode plate body 512 in the first direction X overlaps the entire second electrode plate body 512. The flange portions 5112 are circumferentially connected to the peripheral side of the body portion 5111. The flange portions 5112 protrude from the two sides of the second electrode plate body 512 facing away from each other in the third direction Z. The projection of the support member 53 onto the first electrode plate body 511 in the first direction X covers the entire flange portion 5112 on one side of the two sides facing away from each other. The third direction Z, the first direction X, and the second direction Y intersect pairwise. The second direction Y is parallel to the arrangement direction from the top end to the bottom end of the electrode assembly 51. The electrode assembly 51 further includes the tab 513. The tab 513 is located at the top end. Two support members 53 are provided. A projection of one of the support members 53 onto the first electrode plate body 511 in the first direction X covers the flange portion 5112 on one side of the two sides facing away from each other. A projection of the other one of the support members 53 onto the first electrode plate body 511 in the first direction X covers the flange portion 5112 on the other side of the two sides facing away from each other. The support member 53 includes a first plate body 531 and a second plate body 532 that are disposed opposite in the first direction X. The first plate body 531 is laminated on one side of the electrode assembly 51 in the first direction X. The second plate body 532 is laminated on the other side of the electrode assembly 51 in the first direction X. Respective projections of the first plate body 531 and the second plate body 532 onto the electrode assembly 51 in the first direction X cover the flange portions 5112 on the same side. The support member 53 further includes a guide portion 533. The guide portion 533 includes a first part 5331 and a second part 5332. The first part 5331 is connected to one of the first plate body 531 and the second plate body 532. The second part 5332 is connected to the other one of the first plate body 531 and the second plate body 532. The first part 5331 is slidable or rollable in the first direction X along the second part 5332. The first part 5331 and the second part 5332 are configured to guide opposite movements of the first plate body 531 and the second plate body 532 in the first direction X. The guide portion 533 is connected to one end of the two ends of the first plate body 531 facing away from each other in the third direction Z. A groove 5333 is formed in the second part 5332. The first part 5331 is engaged with the groove 5333 of the second part 5332 through insertion. The first part 5331 is slidable along side walls of the groove 5333 in the first direction X. A maximum deformation dimension of the guide portion 533 in the first direction X is greater than or equal to a maximum expansion dimension of the electrode assembly 51 in the first direction X. The maximum expansion dimension is a maximum dimension of the electrode assembly 51 in the first direction X minus an initial dimension of the electrode assembly 51 in the first direction X. The initial dimension of the electrode assembly 51 in the first direction X is h1. The maximum deformation dimension of the guide portion 533 in the first direction X is greater than or equal to 0.7h1. The support member 53 protrudes from at least one side of two sides of the first electrode plate body 511 facing away from each other in the second direction Y. The support member 53 protrudes from at least one side of the two sides of the first electrode plate body 511 facing away from each other in the third direction Z. The support member 53 is provided with a lightening hole 534.

In the following embodiments, the first direction X is used as both a thickness direction and a height direction, the second direction Y is used as a length direction, and the third direction Z is used as a width direction.

### Embodiment 1

The anode electrode plates are cut into pieces with an active material region of 90 mm in length and 50 mm in width, and the cathode electrode plates are cut into pieces with an active material region of 84 mm in length and 44 mm in width. The cathode and anode electrode plates are stacked layer by layer, with 28 anode electrode plates and 29 cathode electrode plates. The stacked electrode assembly 51 has a thickness of 5.8 mm, with the outermost layer wrapped with a separator for one extra turn to secure the end. The cavity of the aluminum laminate film packaging has a length of 92 mm and a width of 51.5 mm.

The support member 53 has a length of 91 mm, a width of 51 mm, a height of 5.7 mm, and an extensible/contractible amount is 3 mm. As shown in FIG. 10 and FIG. 11, the support member 53 is a rectangular ring structure, and wraps the electrode assembly. The support member 53 protrudes from the anode electrode plate on two sides in the length direction and two sides in the width direction.

After charging and discharging, in the initial 100 cycles, the thickness of the electrode assembly fluctuates between 6.2 mm and 7 mm, and the thickness is projected to reach 8.5 mm at end of life.

Due to the presence of the support member, a region where the anode electrode plate extends beyond the cathode electrode plate, i.e., the flange portion, can nearly remain flat with minimal bending, and therefore electrode plate fracture caused by repeated bending is mitigated.

In the embodiments of this application, the anode electrode plate is a first electrode plate body, and the cathode electrode plate is a second electrode plate body.

### Embodiment 2

The anode electrode plates are cut into pieces with an active material region of 90 mm in length and 50 mm in width, and the cathode electrode plates are cut into pieces with an active material region of 84 mm in length and 44 mm in width. The cathode and anode electrode plates are stacked layer by layer, with 28 anode electrode plates and 29 cathode electrode plates. The stacked electrode assembly has a thickness of 5.8 mm, with the outermost layer wrapped with a separator for one extra turn to secure the end. The cavity of the aluminum laminate film packaging has a length of 92 mm and a width of 51.5 mm.

The support member 53 has a length of 91 mm, a width of 6 mm, a height of 5.7 mm, and an extensible/contractible amount is 3 mm. Two support members are used. As shown in FIG. 8 and FIG. 9, the two support members are disposed on two sides of the electrode assembly in the width direction. The support member 53 protrudes from the anode electrode plate on two sides in the length direction and one side in the width direction.

After charging and discharging, in the initial 100 cycles, the thickness of the electrode assembly fluctuates between 6.2 mm and 7 mm, and the thickness is projected to reach 8.5 mm at end of life.

Due to the presence of the support member, the flange portions on two sides of the anode electrode plate in the width direction can nearly remain flat with minimal bending, and therefore electrode plate fracture caused by repeated bending is mitigated.

In the embodiments of this application, the anode electrode plate is a first electrode plate body, and the cathode electrode plate is a second electrode plate body.

### Embodiment 3

The anode electrode plates are cut into pieces with an active material region of 90 mm in length and 50 mm in width, and the cathode electrode plates are cut into pieces with an active material region of 84 mm in length and 44 mm in width. The cathode and anode electrode plates are stacked layer by layer, with 28 anode electrode plates and 29 cathode electrode plates. The stacked electrode assembly has a thickness of 5.8 mm, with the outermost layer wrapped with a separator for one extra turn to secure the end. The cavity of the aluminum laminate film packaging has a length of 92 mm and a width of 51.5 mm.

The support member has a length of 91 mm, a width of 6 mm, a height of 5.7 mm, and an extensible/contractible amount is 3 mm. Two support members are used. The support member is perforated at 2-mm intervals in the length direction (for weight reduction). The two support members are disposed on two sides of the electrode assembly in the width direction. The support member 53 protrudes from the anode electrode plate on two sides in the length direction and one side in the width direction.

After charging and discharging, in the initial 100 cycles, the thickness of the electrode assembly fluctuates between 6.2 mm and 7 mm, and the thickness is projected to reach 8.5 mm at end of life.

Due to the presence of the support member, the flange portions on two sides of the anode electrode plate in the width direction can nearly remain flat with minimal bending, and therefore electrode plate fracture caused by repeated bending is mitigated.

In the embodiments of this application, the anode electrode plate is a first electrode plate body, and the cathode electrode plate is a second electrode plate body.

### Embodiment 4

The anode electrode plates are cut into pieces with an active material region of 90 mm in length and 50 mm in width, and the cathode electrode plates are cut into pieces with an active material region of 84 mm in length and 44 mm in width. The cathode and anode electrode plates are stacked layer by layer, with 28 anode electrode plates and 29 cathode electrode plates. The stacked electrode assembly has a thickness of 5.8 mm, with the outermost layer wrapped with a separator for one extra turn to secure the end. The cavity of the aluminum laminate film packaging has a length of 92 mm and a width of 51.5 mm.

The support member has a length of 12 mm, a width of 12 mm, a height of 5.7 mm, and an extensible/contractible amount is 3 mm. Four support members are used. As shown in FIG. 12 and FIG. 13, the four support members are disposed at four corners of the electrode assembly. Each support member 53 protrudes from the anode electrode plate on one side in the length direction and one side in the width direction.

After charging and discharging, in the initial 100 cycles, the thickness of the electrode assembly fluctuates between 6.2 mm and 7 mm, and the thickness is projected to reach 8.5 mm at end of life.

Due to the presence of the support member, the flange portions at four corners of the anode electrode plate can nearly remain flat with minimal bending, and therefore electrode plate fracture caused by repeated bending is mitigated.

In the embodiments of this application, the anode electrode plate is a first electrode plate body, and the cathode electrode plate is a second electrode plate body.

### Embodiment 5

The anode electrode plates are cut into pieces with an active material region of 84 mm in length and 44 mm in width, and the cathode electrode plates are cut into pieces with an active material region of 90 mm in length and 50 mm in width. The cathode and anode electrode plates are stacked layer by layer, with 28 anode electrode plates and 29 cathode electrode plates. The stacked electrode assembly has a thickness of 5.8 mm, with the outermost layer wrapped with a separator for one extra turn to secure the end. The cavity of the aluminum laminate film packaging has a length of 92 mm and a width of 51.5 mm.

The support member has a length of 91 mm, a width of 6 mm, a height of 5.7 mm, and an extensible/contractible amount is 3 mm. Two support members are used. As shown in FIG. 8 and FIG. 9, the two support members are disposed on two sides of the electrode assembly in the width direction. The support member 53 protrudes from the anode electrode plate on two sides in the length direction and one side in the width direction.

After charging and discharging, in the initial 100 cycles, the thickness of the electrode assembly fluctuates between 6.2 mm and 7 mm, and the thickness is projected to reach 8.5 mm at end of life.

Due to the presence of the support member, the flange portions on two sides of the cathode electrode plate in the width direction can nearly remain flat with minimal bending, and therefore electrode plate fracture caused by repeated bending is mitigated.

In the embodiments of this application, the cathode electrode plate is a first electrode plate body, and the anode electrode plate is a second electrode plate body.

### Embodiment 6

The anode electrode plates are cut into pieces with an active material region of 90 mm in length and 50 mm in width, and the cathode electrode plates are cut into pieces with an active material region of 84 mm in length and 44 mm in width. The cathode and anode electrode plates are stacked layer by layer, with 28 anode electrode plates and 29 cathode electrode plates. The stacked electrode assembly has a thickness of 5.8 mm, with the outermost layer wrapped with a separator for one extra turn to secure the end. The cavity of the aluminum laminate film packaging has a length of 92 mm and a width of 51.5 mm.

The support member has a length of 91 mm, a width of 6 mm, a height of 5.7 mm, and an extensible/contractible amount is 3 mm. Only one support member is used on one side. That is to say, the support member is disposed on one side of the electrode assembly in the width direction. The support member 53 protrudes from the anode electrode plate on two sides in the length direction and one side in the width direction.

After charging and discharging, in the initial 100 cycles, the thickness of the electrode assembly on one side with the support member fluctuates between 6.2 mm and 7.2 mm, and the thickness of the electrode assembly on one side without the support member fluctuates between 6 mm and 7.5 mm.

On the side with the support member, the flange portion can nearly remain flat with minimal bending, and therefore electrode plate fracture caused by repeated bending is mitigated.

It needs to be noted that the embodiments in this application and the features in the embodiments may be combined with each other without causing any conflict.

In conclusion, it should be noted that the foregoing embodiments are for description of the technical solutions of this application only rather than for limiting this application. Although this application has been described in detail with reference to the foregoing embodiments, those of ordinary skill in the art should appreciate that they can still make modifications to the technical solutions described in the embodiments or make equivalent replacements to some technical features thereof without departing from the spirit and scope of the technical solutions of the embodiments of this application.

## Claims

1. A battery cell, comprising:
an electrode assembly , comprising a first electrode plate body and a second electrode plate body that have opposite polarities and are stacked in a first direction, wherein the first electrode plate body comprises a body portion and flange portions, a projection of the body portion onto the second electrode plate body in the first direction overlaps at least part of the second electrode plate body, and the flange portions are connected to at least part of a peripheral side of the body portion and protrude from an outer edge of the second electrode plate body;
a separator, wrapping the electrode assembly; and
a support member, located in the separator, wherein the support member is disposed on at least one side of the electrode assembly in the first direction, and a projection of the support member onto the first electrode plate body in the first direction covers at least part of the flange portions and at least part of the body portion.

2. The battery cell according to claim 1, wherein the projection of the body portion onto the second electrode plate body in the first direction overlaps the entire second electrode plate body, and the flange portions are circumferentially connected to the peripheral side of the body portion.

3. The battery cell according to claim 1, wherein the flange portions protrude from two sides of the second electrode plate body facing away from each other in a third direction , the projection of the support member onto the first electrode plate body in the first direction covers at least part of the flange portion on at least one side of the two sides facing away from each other, the third direction, the first direction, and a second direction intersect pairwise, the second direction is parallel to an arrangement direction from a top end to a bottom end of the electrode assembly, the electrode assembly further comprises a tab, and the tab is located at the top end.

4. The battery cell according to claim 3, wherein the projection of the support member onto the first electrode plate body in the first direction covers the entire flange portion on one side of the two sides facing away from each other.

5. The battery cell according to claim 4, wherein two support members are provided, a projection of one of the support members onto the first electrode plate body in the first direction covers the flange portion on one side of the two sides facing away from each other, and a projection of the other one of the support members onto the first electrode plate body in the first direction covers the flange portion on the other side of the two sides facing away from each other.

6. The battery cell according to claim 3, wherein the projection of the support member onto the first electrode plate body in the first direction covers the entire first electrode plate body.

7. The battery cell according to claim 3, wherein a plurality of support members are provided, and the plurality of support members are disposed at intervals in the second direction.

8. The battery cell according to claim 7, wherein the projection of the body portion onto the second electrode plate body in the first direction overlaps the entire second electrode plate body, and the flange portions are circumferentially connected to the peripheral side of the body portion; and
two adjacent flange portions are disposed at an included angle, and the projection of the support member onto the first electrode plate body in the first direction covers at least one junction region between two flange portions disposed at an included angle.

9. The battery cell according to any one of claims 1 to 8, wherein the support member comprises a first plate body and a second plate body that are disposed opposite in the first direction, the first plate body is laminated on one side of the electrode assembly in the first direction, the second plate body is laminated on the other side of the electrode assembly in the first direction, and respective projections of the first plate body and the second plate body onto the electrode assembly in the first direction cover at least part of the flange portion and at least part of the body portion.

10. The battery cell according to claim 9, wherein the support member further comprises a guide portion, the guide portion comprises a first part and a second part, the first part is connected to one of the first plate body and the second plate body, and the second part is connected to the other one of the first plate body and the second plate body; and
the first part is slidable or rollable in the first direction along the second part, and the first part and the second part are configured to guide opposite movements of the first plate body and the second plate body in the first direction.

11. The battery cell according to claim 10, wherein the flange portions protrude from the two sides of the second electrode plate body facing away from each other in the third direction; and
the guide portion is connected to one end of two ends of the first plate body facing away from each other in the third direction, the third direction, the first direction, and the second direction intersect pairwise, the second direction is parallel to the arrangement direction from the top end to the bottom end of the electrode assembly, the electrode assembly further comprises the tab, and the tab is located at the top end.

12. The battery cell according to claim 10, wherein the flange portions protrude from the two sides of the second electrode plate body facing away from each other in the third direction; and
two guide portions are provided, the two guide portions are connected to two ends of the first plate body facing away from each other in the third direction, the third direction, the first direction, and the second direction intersect pairwise, the second direction is parallel to the arrangement direction from the top end to the bottom end of the electrode assembly, the electrode assembly further comprises the tab, and the tab is located at the top end.

13. The battery cell according to any one of claims 10 to 12, wherein a groove is formed in the second part, the first part is engaged with the groove of the second part through insertion, and the first part is slidable along side walls of the groove in the first direction.

14. The battery cell according to any one of claims 10 to 13, wherein a maximum deformation dimension of the guide portion in the first direction is greater than or equal to a maximum expansion dimension of the electrode assembly in the first direction, and the maximum expansion dimension is a maximum dimension of the electrode assembly in the first direction minus an initial dimension of the electrode assembly in the first direction.

15. The battery cell according to claim 14, wherein the initial dimension of the electrode assembly in the first direction is h1, and the maximum deformation dimension of the guide portion in the first direction is greater than or equal to 0.7h1.

16. The battery cell according to claim 1, wherein the flange portions protrude from two sides of the second electrode plate body facing away from each other in a second direction, the support member protrudes from at least one of the two sides of the first electrode plate body facing away from each other in the second direction, the second direction is parallel to an arrangement direction from a top end to a bottom end of the electrode assembly, the electrode assembly further comprises a tab, and the tab is located at the top end.

17. The battery cell according to claim 16, wherein the support member protrudes in the second direction from two sides of the first electrode plate body facing away from each other, and a dimension of the support member protruding in the second direction from either side of the first electrode plate body is L1, and L1 satisfies 0.5 mm ≤ L1 ≤ 5 mm.

18. The battery cell according to claim 17, wherein L1 satisfies 0.5 mm ≤ L1 ≤ 1.5 mm.

19. The battery cell according to claim 1, wherein the flange portions protrude from two sides of the second electrode plate body facing away from each other in a third direction; the support member protrudes from at least one of two sides of the first electrode plate body facing away from each other in the third direction; the third direction, the first direction, and a second direction intersect pairwise; the second direction is parallel to an arrangement direction from a top end to a bottom end of the electrode assembly; the electrode assembly further comprises a tab; and the tab is disposed at the top end.

20. The battery cell according to claim 19, wherein the support member protrudes in the third direction from two sides of the first electrode plate body facing away from each other, and a dimension of the support member protruding in the third direction from either side of the first electrode plate body is L2, and L2 satisfies 0.5 mm ≤ L2 ≤ 5 mm.

21. The battery cell according to claim 20, wherein L2 satisfies 0.5 mm ≤ L2 ≤ 1.5 mm.

22. The battery cell according to any one of claims 1 to 21, wherein the support member is provided with a lightening hole.

23. The battery cell according to any one of claims 1 to 22, wherein the battery cell is a pouch-type stacked battery cell.

24. A battery, comprising the battery cell according to any one of claims 1 to 23.

25. A power consuming apparatus, comprising the battery according to claim 24, wherein the battery is configured to supply electric energy.
